# EUROPEAN PATENT SPECIFICATION

(11) **EP 3 638 915 B1**
(45) Date of publication and mention of the grant of the patent: **03.04.2024**
(21) Application number: 17735628.4
(22) Date of filing: 24.05.2017
(51) Int. Cl.: F16D 27/112, F01P 7/08, F01P 7/04, F16D 27/14, F16D 27/00

(54) **ROTOR FOR AN ELECTROMAGNETIC FRICTION COUPLING FOR A COOLING FAN OF A MOTOR VEHICLE**
ROTOR FÜR EINE DOPPELARMATURBEWEGUNGSÜBERTRAGUNGSVORRICHTUNG FÜR EIN KÜHLGEBLÄSE EINES FAHRZEUGS
ROTOR POUR UN DISPOSITIF DE TRANSMISSION DE MOUVEMENT À DOUBLE INDUIT POUR UN VENTILATEUR DE REFROIDISSEMENT D'UN VÉHICULE

(43) Date of publication of application: 22.04.2020
(73) Proprietor: Baruffaldi S.p.A., 20067 Tribiano (IT)
(72) Inventor: BOFFELLI, Piercarlo, 20067 Tribiano (MI) (IT)
(74) Representative: Stucovitz, Alessandro
(86) International application number: PCT/IB2017/053053
(87) International publication number: WO 2018/215817

(56) References cited:
- EP-A1- 2 781 714
- EP-A2- 0 645 550
- EP-A2- 1 746 266
- DE-A1-102004 042 687
- DE-B- 1 050 883
- US-A1- 2006 144 666

## Description

The present invention relates to a rotor for devices for transmission of the movement to fans for cooling the coolant in vehicles and to a double-armature movement transmission device provided with such a rotor.

It is known, in the technical sector relating to the cooling of the coolants contained in the radiators of motor vehicles, that there exists the need to force air onto the said radiator, in order to obtain as rapid as possible dissipation of heat from the liquid externally, said forced air flow being obtained by causing the rotation of a fan, normally mounted on the shaft of the water pump, or on the driving shaft, or on a fixed driven shaft carrying a pulley which receives movement from a belt operated by the driving shaft.

It is also known that said fan must be made to rotate only upon reaching of a certain predefined water temperature detected by means of a thermostat which operates an electromagnetic friction coupling, closing of which causes the rotation of the fan.

In addition to normal devices of the so-called ON/OFF type, there is also a need, in the case of particular operating requirements, for devices able to operate a fan so that it is able to rotate:
- at a lower speed than that of the transmission shaft for cooling in low external temperature conditions;
- at a speed the same as or even greater than that of the transmission shaft at higher external temperatures or during use in critical conditions which result in overheating of the engine;
- at zero speed, namely with the fan which does not rotate at all and remains in the idle condition with respect to the transmission shaft, in the case of particularly low temperatures at which further cooling is not useful or is even damaging.

Examples of such devices are known from EP 1,746,266, in the name of the same present Applicant, which describes devices which comprise an electromagnetic clutch arranged between an actuating rotor and the fan, which clutch transmits the movement to the fan via two armatures which are respectively and selectively recallable against the rotor by means of excitation of the electromagnet for activating the clutch.

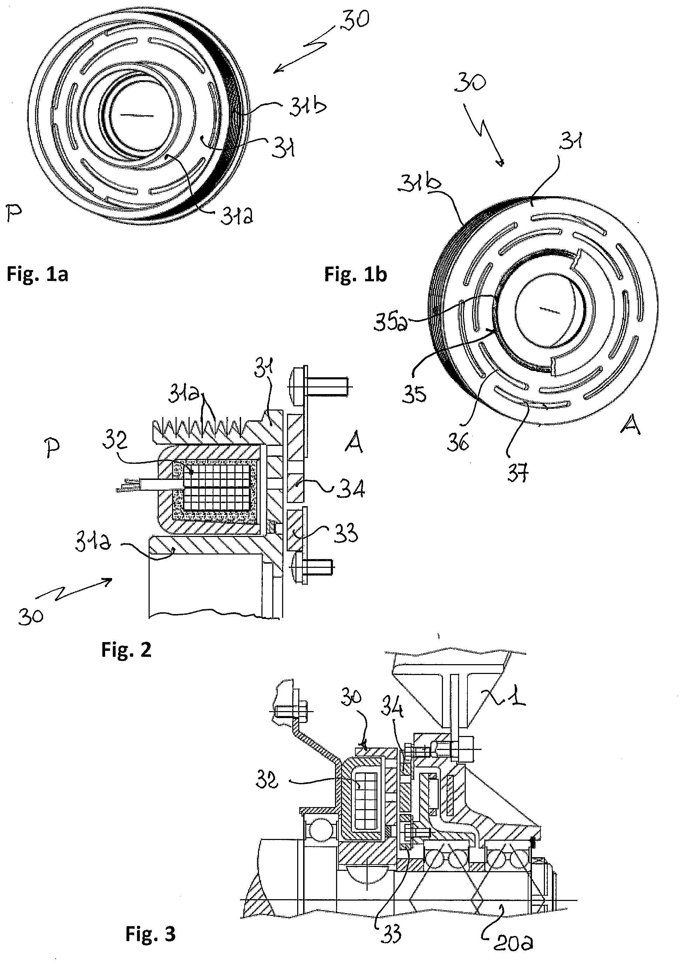

With references to Figs. 1, 2 and 3, an example of a rotor 30 according to the prior art comprises an annular body 31 integral with a coaxial sleeve 31a extending towards the rear part P and suitable for engagement with a supporting driving shaft 20a (Fig. 3) for transmission of the movement to the fan 1.

Preferably the outer surface of the radially outer edge of the annular body has, formed therein, annular hollow slots 31b for forming the annular edge of the rotor in the manner of a pulley suitable for engagement with a drive belt driven by the driving shaft of a vehicle, for taking up a rotational movement.

In its front surface the annular body 31 has a circumferential hollow slot 35 formed along a diameter slightly greater than the diameter of the sleeve 31b and filled with a non-magnetic material 35a, as well as radially outer eyelets 36,37 suitable for creating a magnetic flux deviated along a respective first inner armature 33 and a second outer armature 34 (Fig. 2,3) upon suitable excitation of the coil(s) of the electromagnet 32. Although functional, these devices have given rise to drawbacks associated with their use on some types of engines subject to high vibrations which cause fractures in some zones of the rotor with consequent breakage of the component and interruption of the magnetic circuit, the flows of which cause the armatures to be recalled against the rotor and stoppage of the vehicle.

DE 10 2004 042687 discloses a rotor configured for use in a coupling with two electromagnets that individually recall a respective armature and which, in order to solve this problem, envisages filling the said eyelets with non-magnetic material and leaving interconnection webs in-between eyelets arranged on a same circumference. EP 2 781 714 discloses a rotor according to the preamble of claim 1 having continuous circumferential gaps filled with a non-magnetic material; with this solution, however, magnetically isolated annular sectors are created and these prevent the magnetic flux from following a radial path from an outermost diameter towards an innermost diameter.

This configuration therefore also prevents the operation of the rotor in the case of a fan controlled by an electromagnetic coupling with single electromagnet and double armature.

The technical problem which is posed therefore is that of providing a rotor for devices for transmission of the rotational movement to a fan for cooling the coolant in motor vehicles, which is not damaged by or at least less subject to the damage resulting from particular vibration conditions caused by the engines on which the movement transmission device is mounted and at the same time is able to ensure a regular passage of an electromagnetic flow from a radially outermost zone to a radially innermost zone.

In connection with this problem, conveniently the rotor should also be such as to have both small diametral dimensions and a small axial thickness, while maintaining a high torque transmission performance for operation of fans which are also large in size.

A further object of the present invention is to develop a device for transmission of the rotational movement to a fan for cooling the coolant in motor vehicles, which is provided with such a rotor and is able to cause rotation of the fan at a speed different from that of the driving shaft and able to be determined depending on the actual cooling requirement of the engine, which device has compact dimensions without high and costly projecting rotational masses and is formed by a small number of costly parts.

These technical problems are solved according to the present invention by a composite rotor assembly according to Claim 1 and by an electromagnetic friction coupling according to Claim 10 and by a device for transmission of the movement to a vehicle cooling fan equipped with such a friction coupling according to Claim 13.

Further details may be obtained from the following description of non-limiting examples of embodiment of the present invention, provided with reference to the accompanying drawings, in which:
Figures 1a-1b: a schematic perspective view, from the back and from the front, respectively, of a rotor according to the prior art with a radially inner armature of a movement transmission device schematically shown in Fig. 2;
Figure 2: shows a partial schematic cross-section of a rotor according to the prior art applied to a double-armature electromagnetic friction coupling for transmission of the movement via a double armature;
Figure 3: shows a schematic vertical section through a motor vehicle fan with a movement transmission device according to the prior art;
Figure 4: shows a front view of a rotor according to the present invention;
Figure 5: shows a cross-section along a vertical diametral plane of the rotor according to Fig. 4 illustrating a first embodiment of a rotor according to the invention;
Figure 6: shows a cross-section along a vertical diametral plane of the rotor according to Fig. 4 illustrating a second embodiment of a rotor according to the invention;
Figure 7: shows a cross-section along a vertical diametral plane of the rotor according to Fig. 4 illustrating a third embodiment of a rotor according to the invention;
Figures 8a-8c: show schematic partial cross-sections of a partial detail of the first embodiment of the rotor according to the invention associated with the armatures of an electromagnetic friction coupling, in the idle, first rotational speed and second rotational speed conditions, respectively;
Figures 9a-9c: show schematic partial cross-sections of a partial detail of the second embodiment of the rotor according to the invention associated with the armatures of an electromagnetic friction coupling, in the idle, first rotational speed and second rotational speed conditions, respectively;
Figures 10a-10b: show schematic partial cross-sections of a partial detail of the third embodiment of the rotor according to the invention associated with the armatures of an electromagnetic friction coupling, in the idle, first rotational speed and second rotational speed conditions, respectively;
Figure 11: shows a schematic vertical section through a motor vehicle fan with movement transmission device according to the invention in the idle condition.

For the purposes of the description below the layouts shown by way of example will refer to a pair of reference axes, i.e. longitudinal axis X-X, for easier description coinciding with the axis of rotation of the rotor, and transverse/radial axis Y-Y, as well as a front side A and a rear side P situated opposite each other in the axial-longitudinal direction X-X.

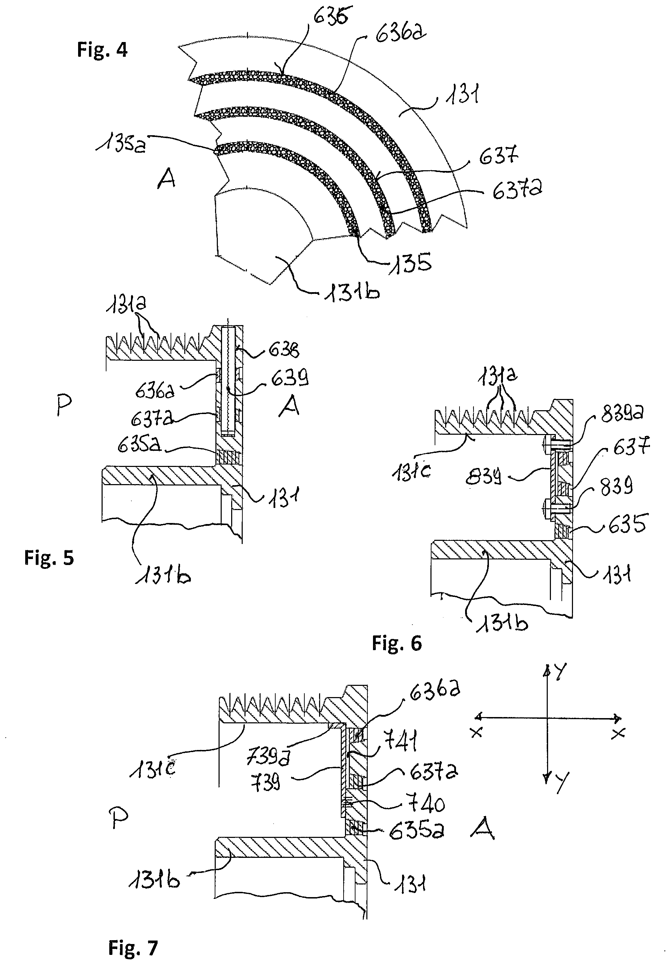

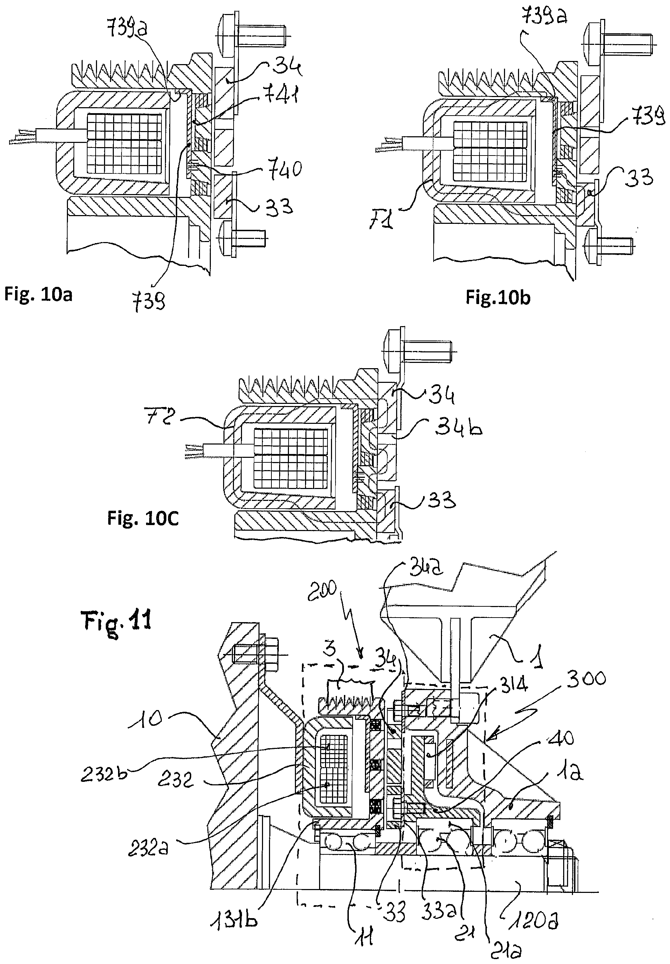

With reference to Figs. 4,5,6,7 a rotor according to the invention comprises:
an annular body 131 integral with a coaxial sleeve 131b extending towards the rear side P and designed to be coupled with a fixed supporting shaft 120a shown by way of example in Fig. 11.

Preferably, the radially outer edge of the annular body extends towards the rear part P and has an outer surface on which movement take-up means are provided, for example annular grooves 131b for forming a pulley suitable for engagement with a drive belt 3 driven by the driving shaft and preferably of the toothed type.

According to the invention it is envisaged that the annular body 131 of the rotor comprises always (Fig. 4): a circumferential gap 135 formed along a diameter slightly greater than the diameter of the sleeve 131 and filled with a bead 135a of non-magnetic material conventionally applied by means of welding and suitable for interrupting the continuity of magnetic flux through the rotor; as will appear more clearly below, the gap 135 is designed to interrupt the passage of a magnetic flux generated by an electromagnet 232, which flux will be in this way obliged to cross the thickness of the rotor in order to continue along an armature opposite to the rotor and close a magnetic circuit for recalling the said armature;
- a continuous, circumferential, outer gap 636 arranged along a first circumference situated between the inner gap 135 and the outer annular edge of the rotor and filled with non-magnetic material 636a providing further reinforcement;
- a continuous, circumferential, intermediate gap 637 arranged along a circumference situated between the inner gap 135 and the said outer gap 636 and in turn filled with non-magnetic material 637a providing further reinforcement.

According to a first embodiment of the rotor according to the invention (Fig. 5) it is also envisaged that:
- the annular body 131 of the rotor has a plurality of radial holes 638, which are angularly spaced from each other, for receiving respective pins 639 made of ferromagnetic material and extending radially from the circle sector comprised between the radially outer edge of the rotor and the circle sector comprised between the radially innermost gap 135 and the intermediate gap 637.

Figure 6 shows a second embodiment of a rotor according to the invention comprising:
- a ferromagnetic annular plate 839 applied on the rear end surface of the annular body 131 and fixed to the latter by suitable fixing means, such as screws 839a, and radially extending between the radially inner surface 131c of the radially outer edge of the rotor and the circle sector comprised between the radially innermost gap 135 and the intermediate gap 637.

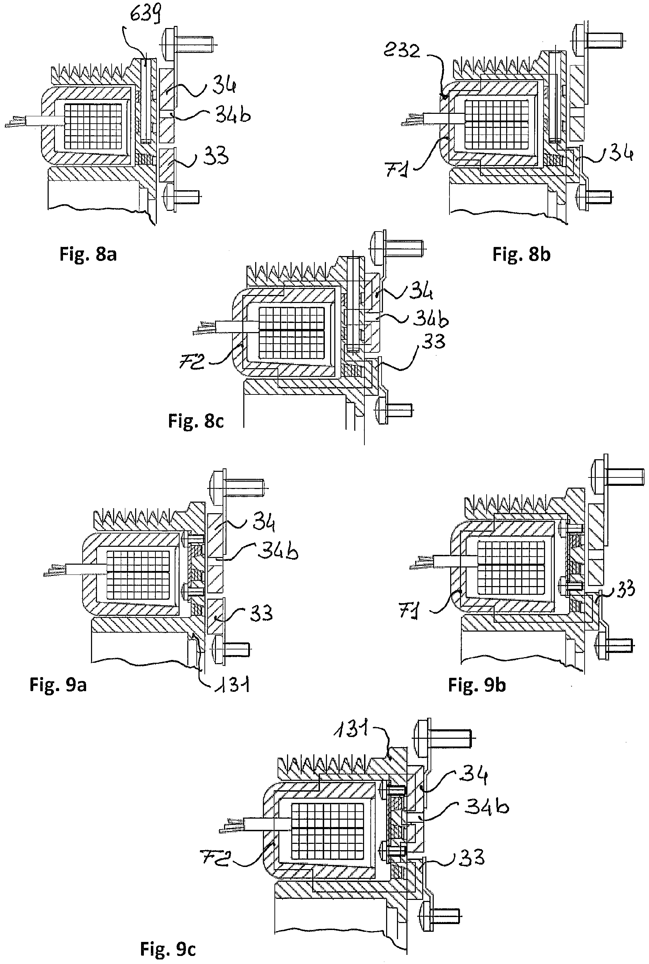

The annular plate 839 is designed to short-circuit the non-magnetic intermediate gap 637 and outer gap 636 so as to close the magnetic flux circuit F1 for recalling the inner armature 33 (Fig. 9b).

The axial thickness of the annular plate is such as to determine a passage of magnetic flux sufficient for ensuring the required force for recalling the inner armature, for example a passage of flux equal to that determined by the pins 639 of the preceding embodiment.

As shown in Fig. 7, a third embodiment of the rotor according to the invention is envisaged, said embodiment comprising in this case an annular plate 739 radially extending between the inner surface 131c of the radially outer edge of the rotor 130 and the circle sector comprised between the radially innermost gap 135 and the intermediate gap 637; the plate 739 is provided with an edge 739a extending in the axial direction towards the rear side P and arranged in contact with the radially inner surface 131c of the axial extension of the radially outer edge of the rotor; with this configuration the passage of the magnetic flux is further improved, said flux finding a greater passage area when crossing the two axial elements in order to continue then radially along the annular plate.

Preferably, the plate 739 is applied to the rotor via means designed to prevent any deformation thereof, ensuring the planarity of the plate, and therefore the best possible contact between the two parts intended for the passage of magnetic flux. An example of these means is illustrated in Fig. 6 by a spot weld 740.

Both in the case of Fig. 6 and in the case of Fig. 7 the annular body 131 has, preferably, a depression 741 extending in the radial section comprised between the outermost gap 636 and the innermost gap 637; along this section the plate 639, 739 is not in contact with the rotor, it thus being possible to reduce the dispersion of magnetic flux in the annular sector not affected by the recall of the innermost armature.

With this solution a further advantage is also obtained from the fact that the elimination of the screws allows the gap 636 with the associated non-magnetic material 636a to be arranged closer to the annular edge of the rotor, thus allowing better use of the front surface area thereof which, for the same radial dimensions, results in an increase in the useful magnetic flux and therefore torque applicable to the armature, or, for the same torque, a possible reduction in the radial dimensions of the rotor.

Preferably, the rotor is formed with tempered magnetic steel in order to reduce the magnetic hysteresis once the excitation of the electromagnet has been deactivated.

Preferably, the bead 636, 637 filling the gaps 136, 137 has a thickness such as to leave a void in the axial thickness on the front end face of the rotor; this therefore ensures iron/iron contact between the surfaces of the rotor and the armatures of the electromagnetic friction coupling 200 designed to ensure the calculated magnetic circuit and therefore the torque which can be transmitted via the friction coupling.

Fig. 11 shows the implementation of an electromagnetic coupling 200 comprising an electromagnet 232 fixed to a fixed part 10 and with a coaxial winding; the electromagnet is coaxially, at least partially, inserted inside the rotor 131 according to the invention.

Two armatures, i.e. a radially innermost armature 33 with a smaller diameter and a radially outermost armature 34 with a larger diameter, are positioned on the outside of the rotor and in a position opposite the electromagnet and are respectively connected to a load to be rotated, via respective resilient elements, in the example resilient membranes 33a,34a with a different resilience which are described in detail below.

According to a preferred embodiment, the winding of the electromagnet comprises two windings, which are preferably concentric, i.e. one winding 232a and one winding 232b, suitable for conducting two different amounts of current and in turn suitable for generating two different magnetic fluxes for recall of a corresponding armature against the different resistive force of the respective resilient membrane.

Alternatively the electromagnet may be realized with a single coil PWM-controlled by reducing the power supply so as to determine the correct excitation for attracting only the inner armature 33 or both the armatures 33,34.

Although not shown, it is envisaged that the membranes may be replaced by springs.

In the device for transmission of the movement to vehicle fans 1 illustrated the cooling fan 1 is attached to a supporting bell member 1a arranged on a bearing 1b mounted on a fixed shaft 120a of the vehicle, so as to be coaxial with the axis of rotation thereof.

The same fixed shaft 120a also has mounted thereon, locked in rotation therewith, a rotor 131 according to the invention - shown in the third embodiment thereof in Fig. 7 - which forms the rotating element of a first coupling 200 comprising the annular electromagnet 232 concentric with the rotor 131 and mounted on the outer ring of a bearing 11 arranged between the shaft 120a and the sleeve 131a of the rotor;
the electromagnet 232 is electrically connected by means of wires to a control unit with control logic management based for example on measurement of the temperature of the cooling fluid.

The first armature 33 is arranged on the opposite side to the electromagnet 232, relative to the rotor 131, and is connected to an annular flange 40 joined together with an outer ring 21a of a bearing 21 in turn keyed onto the shaft 120a.

The connection between the armature 33 and the flange 40 is realized via a resilient element 33a designed to allow axial movements of the armature 33, but prevent relative rotation of armature and flange 40.

Said flange 40 also carries the first part 310 of a second coupling 300, the other part 320 of which is joined together with the bell member 1a of the fan 1.

In greater detail, said first part 310 of the coupling comprises the said flange 40 which is made of magnetic material and which carries permanent magnets 314.

The second coupling part 320 is formed by a ring 321, which is arranged radially opposite the said permanent magnets 314 and is made of conductive material and is joined together with the bell member 1a which is also made of non-magnetic material such as die-cast aluminium.

With this first configuration, the first part 310 of the second coupling forms the rotor part for generating the movement of the said coupling which, by means of the flange 40 and the permanent magnets 314, causes the generation of eddy currents with induction concatenation via the driven ring 321, which is rotationally driven, causing rotation of the bell member 1a and therefore the fan 1.

Concentrically with the first armature 33 a second armature 34 is arranged radially more externally with respect to the first armature and is connected to the bell member 1a via a resilient element, for example, a resilient membrane 34a which is designed to allow axial movements of the armature 34, but prevent the relative rotation of armature and bell member.

The membrane 34a of the second armature 34 has a greater resistance in the axial direction than that of the membrane 33a of the first armature, therefore requiring a greater recall force in order to allow displacement of the armature towards the rotor.

The second armature 34 also has a radial dimension much greater than that of the first armature 33 and a plurality of circle-arc slots 34b arranged along the same circumference and designed to cause a deviation of the magnetic flux so as to increase the force of magnetic attraction and therefore the torque which can be transmitted from the rotor to the armature and therefore to the fan 1.

With this configuration and with either one of the embodiments of the rotor according to the invention it is possible to obtain the different required speeds of rotation of the fan 1 and in particular:
a) in conditions where the electromagnet 232 is not excited (Fig.8a;9a;10a) and therefore the friction coupling is disengaged, the movement of the driving shaft 20 is not transmitted to the armatures 33 and/or 34 and therefore to the fan 1 which remains idle;
b) in the condition where the electromagnet 232 is excited by means of the first winding 232b (Fig.8b;9b;10b), a circuit F1 is created for the magnetic flux which, passing from the electromagnet to the rotor 131, is deviated from the annular gap 135 onto the first armature 33, causing recall of only the first smaller-size armature 33 which, overcoming the reduced resistance in the axial direction of the membrane 33a, engages with the rotor 131 and transmits the movement to the fan via the Foucault coupling 300; since the transmission occurs with relative slipping of the flange 40 and the bell member 1a, the latter rotates a slower speed than that of the driving shaft 20;
c) in the conditions where the electromagnet 232 is excited (Figs.8c;9c;10c) by means of the simultaneous excitation of the first winding 232a and the second winding 232b, a circuit F2 is created for the magnetic flux which passes from the electromagnet through the rotor 131, is alternately deviated from the rotor to the armature 34 and from the latter back again to the rotor, via the series of outer gaps 136 and the series of intermediate gaps 137 of the rotor and the slots 34b of the second armature 34, and is again closed on the first armature as described for the first flux circuit F1; in this way the second armature 34 is also recalled and, overcoming the resistance of the associated membrane 34a, engages with the rotor 31, transmitting the movement of the driving shaft directly to the bell member 1a and resulting in a speed of rotation of the fan which is the same as the speed of rotation of the said driving shaft.

Although described in relation to an example (Fig. 11) where the movement is transmitted to the rotor by a pulley connected thereto, the situation is also possible where the said support means (120a) form an extension of the driving shaft of the vehicle (Fig. 3) and are joined together with the rotor 131 for transmission of the rotational movement thereto.

It is therefore clear how the rotor according to the invention provides a solution to the technical problem posed, as a result of the gaps formed on the said rotor being filled with non-magnetic material, achieving in particular a greater mechanical resistance to the vibrations produced by the engines of the vehicles on which it is mounted, while maintaining at the same time high levels of magnetic flux and therefore torque which the device may transmit, both in the case of reduced excitation for recall of only the innermost armature and in the case of full excitation for recall of both the armatures.

Similar characteristic features distinguish electromagnetic friction couplings and double-armature devices according to the invention designed to achieve the required operation at several speeds and in the idle condition with smaller dimensions both axially and radially and a smaller number of parts, thus avoiding also the use of special bearings with a consequent reduction in the associated production, assembly and maintenance costs.

## Claims

1. A composite rotor assembly adapted for use in an electromagnetic friction coupling comprising two armatures concentric with each other and a single fixed electromagnet with coaxial winding able to be excited with a reduced excitation for recalling only the innermost armature and with a full excitation for recalling both of the armatures, the composite rotor assembly comprising:
an annular body (131) made of ferromagnetic material and suitable for transporting a magnetic flux, the annular body (131) comprising:
a front surface integral with a coaxial sleeve (131b), the coaxial sleeve (131b) extending towards a rear side (P) in a longitudinal-axial direction (X-X) and suitable for coupling with a support shaft (120a);
wherein a radially outer edge of the annular body (131) extends axially towards the rear side (P);
wherein an inner gap (135) is formed in the annular body (131) and continuously extends along a circumference of the annular body (131), along a diameter greater than the diameter of the coaxial sleeve (131b) and coaxial therewith;
wherein a continuous outer gap (636) is arranged along a circumference of the annular body (131), is concentric with said inner gap (135), and has a diameter comprised between the outer diameter of the front surface and the diameter of said inner gap (135);
wherein a continuous intermediate gap (637) is arranged along a circumference of the annular body (131), is concentric with said inner recess (135), and has a diameter comprised between the diameter of the outer gap (636) and the diameter of said inner gap (135);
**characterised in that**
said inner, outer and intermediate gaps (135, 636, 637) are filled with a solid non-magnetic welded material and suitable for interrupting the continuity of a magnetic flux;
wherein the annular body (131) is formed with concentric outer, intermediate and inner annular sectors of ferromagnetic material, with the outer annular sector radially comprised between the radially outer edge of the annular body (131) and the outer gap (636), the inner annular sector radially comprised between the inner gap (135) and the intermediate gap (637), and the intermediate annular sector radially comprised between the intermediate gap (637) and the outer gap (636);
wherein the annular body (131) has either:
a plurality of radial holes (638), which are angularly spaced from each other, and which receive radially extending pins (639) made of ferromagnetic material and extending radially from the outer annular sector to the inner annular sector; or
a ferromagnetic annular plate (739;839) fixed to a rear surface of the annular body (131) and radially extending between the radially outer edge of the annular body (131) and the inner annular sector;
the pins (639) or plate (739;839) allowing radial passage of a magnetic flux between the outer annular sector and the inner annular sector of the annular body (131).

2. Rotor according to Claim 1, **characterized in that** the radial holes (638) extend inside the annular body (131) of the rotor from the radially outer edge to the inner annular sector.

3. Rotor according to Claim 1, **characterized in that** said ferromagnetic annular plate (839) is applied onto the rear surface of the annular body (131), via fixing means such as screws (839a), and radially extends between a radially inner surface (131c) of the axially extended outer edge of the annular body and the inner annular sector.

4. Rotor according to Claim 1, **characterized in that** said annular plate (739) radially extends between a radially inner surface (131c) of the axially extended radially outer edge of the annular body and the inner annular sector and is provided with an edge (739a) extending in the axial direction and arranged in contact with a radially inner surface (131c) of the axially extended outer edge.

5. Rotor according to Claim 4, **characterized in that** said annular plate (739) is fastened to the annular body (131) by means of welding (740).

6. Rotor according to Claim 4, **characterized in that** said annular plate (739) is fastened to the annular body (131) by means of gluing.

7. The rotor assembly according to any one of the preceding claims, wherein the solid non-magnetic welded material in the gaps (135, 636, 637) has a thickness such as to leave a void in the axial direction at a front face of the annular body (131).

8. The rotor assembly according to any one of the preceding claims, **characterized in that** the annular body (131) is made of tempered magnetic steel.

9. Rotor according to any one of Claims 1 to 8, **characterized in that** a radially outer surface (131a) of the axially extended radially outer edge is formed as means for taking up a rotational movement.

10. An electromagnetic friction coupling (200) comprising a fixed electromagnet (210) with coaxial winding (220), a rotor assembly which houses the electromagnet (210), and two armatures (33, 34) concentric with each other, **characterized in that** said rotor assembly is a rotor assembly according to any one of the preceding claims.

11. The electromagnetic friction coupling according to claim 10, **characterized in that** said armatures (33, 34) have different diameters.

12. The friction coupling according to claim 10 or 11, **characterized in that** the electromagnet (232) comprises two independent and concentric windings (232a, 232b).

13. A device for transmitting movement to a fan (1) for cooling a coolant in a motor vehicle, the device comprising:
support means (120a) for supporting the fan (1) by means of an idle bell member (1a); and
an electromagnetic coupling (200) as defined in any one of claims 10 to 12;
wherein a first armature (33) of the electromagnetic coupling (200) is connected to the idle bell member (1a) by means of a second eddy current coupling (300), wherein a second armature (34) of the electromagnetic coupling (200) is directly connected to the bell member (1a), and wherein the second eddy current coupling (300) is arranged between the rotor assembly (131) and the bell member (1a), with a fixed electromagnet (232) being inserted in the rotor assembly (131).

14. The device according to claim 13, **characterized in that** the electromagnet (232) is mounted on the ring of a bearing (11) by means of a support flange (12), said bearing (11) being arranged between the rotating shaft and the support flange (12) joined to the base (10) of an engine of the motor vehicle.

15. The device according to claim 13 or 14, **characterized in that** said second eddy current coupling comprises a first part (310) joined together with a flange (40) connected to the first armature and a second part (320) joined together with the bell member (1a) of the fan (1).

16. The device according to claim 15, **characterized in that** said first part (310) of the coupling comprises a ring (313) made of magnetic material for containing permanent magnets (214).

17. The device according to claim 15 or 16, **characterized in that** said second part (220) of the coupling comprises a ring (321) made of conductive material and joined together with the bell member (1a) which is in turn made of non-magnetic material.

18. The device according to any one of claims 13 to 17, **characterized in that** said support means (120a) are fixed and **in that** the rotor (131) is mounted on the said support means with a bearing (11) arranged in between.

19. The device according to any one of claims 13 to 17, **characterized in that** said support means form an extension of the driving shaft of the vehicle and are locked together with the rotor for transmission of the rotational movement thereto.

## Patentansprüche

1. Zusammengesetzte Rotoranordnung, die zur Verwendung in einer elektromagnetischen Reibungskupplung ausgelegt ist, umfassend: zwei zueinander konzentrische Anker und einen einzigen festen Elektromagneten mit koaxialer Wicklung, der in der Lage ist, mit einer reduzierten Erregung zum Zurückziehen nur des innersten Ankers und mit einer vollen Erregung zum Zurückziehen beider Anker erregt zu werden, wobei die zusammengesetzte Rotoranordnung Folgendes umfasst:
einen ringförmigen Körper (131), der aus ferromagnetischem Material besteht und zum Transportieren eines magnetischen Flusses geeignet ist, wobei der ringförmige Körper (131) Folgendes umfasst:
eine vordere Oberfläche, die in einer koaxialen Hülse (131b) integriert ist, wobei die koaxiale Hülse (131b) sich zu einer Rückseite (P) in einer längsaxialen Richtung (X-X) hin erstreckt und zur Kopplung mit einer Trägerwelle (120a) geeignet ist;
wobei sich ein radial äußerer Rand des ringförmigen Körpers (131) axial zu der Rückseite (P) hin erstreckt;
wobei ein innerer Spalt (135) in dem ringförmigen Körper (131) ausgebildet ist und sich kontinuierlich entlang eines Umfangs des ringförmigen Körpers (131), entlang eines Durchmessers, der größer als der Durchmesser der koaxialen Hülse (131b) ist, und koaxial dazu erstreckt;
wobei ein durchgehender äußerer Spalt (636) entlang eines Umfangs des ringförmigen Körpers (131) angeordnet ist, konzentrisch zu dem inneren Spalt (135) ist und einen Durchmesser aufweist, der zwischen dem äußeren Durchmesser der vorderen Oberfläche und dem Durchmesser des inneren Spalts (135) liegt;
wobei ein durchgehender zwischenliegender Spalt (637) entlang eines Umfangs des ringförmigen Körpers (131) angeordnet ist, konzentrisch zu der inneren Aussparung (135) ist und einen Durchmesser aufweist, der zwischen dem Durchmesser des äußeren Spalts (636) und dem Durchmesser des inneren Spalts (135) liegt;
**dadurch gekennzeichnet, dass**
die inneren, äußeren und zwischenliegenden Spalte (135, 636, 637) mit einem festen, nichtmagnetischen, geschweißten Material gefüllt sind und geeignet sind, die Kontinuität eines magnetischen Flusses zu unterbrechen;
wobei der ringförmige Körper (131) mit konzentrischen äußeren, zwischenliegenden und inneren ringförmigen Abschnitten aus ferromagnetischem Material ausgebildet ist, wobei der äußere, ringförmige Abschnitt radial zwischen dem radial äußeren Rand des ringförmigen Körpers (131) und dem äußeren Spalt (636) liegt, der innere, ringförmige Abschnitt radial zwischen dem inneren Spalt (135) und dem zwischenliegenden Spalt (637) liegt, und der zwischenliegende, ringförmige Abschnitt radial zwischen dem zwischenliegenden Spalt (637) und dem äußeren Spalt (636) liegt;
wobei der ringförmige Körper (131) entweder:
eine Vielzahl von radialen Löchern (638), die winkelmäßig voneinander beabstandet sind und die sich radial erstreckende Stifte (639) aufnehmen, die aus ferromagnetischem Material bestehen und sich radial von dem äußeren ringförmigen Abschnitt zu dem inneren ringförmigen Abschnitt erstrecken; oder
eine ferromagnetische ringförmige Platte (739; 839), die an einer hinteren Oberfläche des ringförmigen Körpers (131) befestigt ist und sich radial zwischen dem radial äußeren Rand des ringförmigen Körpers (131) und dem inneren ringförmigen Abschnitt erstreckt, aufweist;
wobei die Stifte (639) oder die Platte (739; 839) den radialen Durchgang eines magnetischen Flusses zwischen dem äußeren ringförmigen Abschnitt und dem inneren ringförmigen Abschnitt des ringförmigen Körpers (131) ermöglichen.

2. Rotor nach Anspruch 1, **dadurch gekennzeichnet, dass** sich die radialen Löcher (638) innerhalb des ringförmigen Körpers (131) des Rotors von dem radial äußeren Rand zum inneren ringförmigen Abschnitt erstrecken.

3. Rotor nach Anspruch 1, **dadurch gekennzeichnet, dass** die ferromagnetische, ringförmige Platte (839) über Befestigungsmittel wie Schrauben (839a) auf der hinteren Oberfläche des ringförmigen Körpers (131) angebracht ist und sich radial zwischen einer radial inneren Oberfläche (131c) des sich axial erstreckenden, äußeren Randes des ringförmigen Körpers und dem inneren ringförmigen Abschnitt erstreckt.

4. Rotor nach Anspruch 1, **dadurch gekennzeichnet, dass** sich die ringförmige Platte (739) radial zwischen einer radial inneren Oberfläche (131c) des sich axial erstreckenden, radial äußeren Randes des ringförmigen Körpers und dem inneren ringförmigen Abschnitt erstreckt und mit einem Rand (739a) versehen ist, der sich in axialer Richtung erstreckt und in Kontakt mit einer radial inneren Oberfläche (131c) des sich axial erstreckenden, äußeren Randes angeordnet ist.

5. Rotor nach Anspruch 4, **dadurch gekennzeichnet, dass** die ringförmige Platte (739) mittels Schweißen (740) an dem ringförmigen Körper (131) befestigt ist.

6. Rotor nach Anspruch 4, **dadurch gekennzeichnet, dass** die ringförmige Platte (739) mittels Kleben an dem ringförmigen Körper (131) befestigt ist.

7. Rotoranordnung nach einem der vorhergehenden Ansprüche, wobei das feste, nichtmagnetische, geschweißte Material in den Spalten (135, 636, 637) eine derartige Dicke aufweist, dass ein Hohlraum in axialer Richtung an einer vorderen Oberfläche des ringförmigen Körpers (131) verbleibt.

8. Rotoranordnung nach einem der vorhergehenden Ansprüche, **dadurch gekennzeichnet, dass** der ringförmige Körper (131) aus gehärtetem Magnetstahl besteht.

9. Rotor nach einem der Ansprüche 1 bis 8, **dadurch gekennzeichnet, dass** eine radial äußere Oberfläche (131a) des sich axial erstreckenden, radial äußeren Randes als Mittel zur Aufnahme einer Drehbewegung ausgebildet ist.

10. Elektromagnetische Reibungskupplung (200), die einen festen Elektromagneten (210) mit koaxialer Wicklung (220), eine Rotoranordnung, die den Elektromagneten (210) aufnimmt und zwei zueinander konzentrische Anker (33, 34) umfasst, **dadurch gekennzeichnet, dass** die Rotoranordnung eine Rotoranordnung nach einem der vorhergehenden Ansprüche ist.

11. Elektromagnetische Reibungskupplung nach Anspruch 10, **dadurch gekennzeichnet, dass** die Anker (33, 34) unterschiedliche Durchmesser aufweisen.

12. Reibungskupplung nach Anspruch 10 oder 11, **dadurch gekennzeichnet, dass** der Elektromagnet (232) zwei unabhängige und konzentrische Wicklungen (232a, 232b) umfasst.

13. Vorrichtung zur Übertragung einer Bewegung auf einen Lüfter (1) zur Kühlung eines Kühlmittels in einem Kraftfahrzeug, wobei die Vorrichtung Folgendes umfasst:
Stützmittel (120a) zum Stützen des Lüfters (1) mittels eines freilaufenden Glockenelements (1a); und
eine elektromagnetische Kupplung (200) nach einem der Ansprüche 10 bis 12;
wobei ein erster Anker (33) der elektromagnetischen Kupplung (200) mittels einer zweiten Wirbelstromkupplung (300) mit dem freilaufenden Glockenelement (1a) verbunden ist, wobei ein zweiter Anker (34) der elektromagnetischen Kupplung (200) direkt mit dem Glockenelement (1a) verbunden ist und wobei die zweite Wirbelstromkupplung (300) zwischen der Rotoranordnung (131) und dem Glockenelement (1a) angeordnet ist, wobei ein fester Elektromagnet (232) in die Rotoranordnung (131) eingesetzt ist.

14. Vorrichtung nach Anspruch 13, **dadurch gekennzeichnet, dass** der Elektromagnet (232) mittels eines Stützflansches (12) auf dem Ring eines Lagers (11) montiert ist, wobei das Lager (11) zwischen der rotierenden Welle und dem Stützflansch (12) angeordnet ist, der mit dem Boden (10) eines Motors des Kraftfahrzeugs verbunden ist.

15. Vorrichtung nach Anspruch 13 oder 14, **dadurch gekennzeichnet, dass** die zweite Wirbelstromkupplung einen ersten Teil (310), der mit einem mit dem ersten Anker verbundenen Flansch (40) verbunden ist, und einen zweiten Teil (320), der mit dem Glockenelement (1a) des Lüfters (1) verbunden ist, umfasst.

16. Vorrichtung nach Anspruch 15, **dadurch gekennzeichnet, dass** der erste Teil (310) der Kupplung einen Ring (313) umfasst, der aus magnetischem Material zur Aufnahme von Permanentmagneten (214) besteht.

17. Vorrichtung nach Anspruch 15 oder 16, **dadurch gekennzeichnet, dass** der zweite Teil (220) der Kupplung einen Ring (321) umfasst, der aus leitfähigem Material besteht und mit dem Glockenelement (1a) verbunden ist, das seinerseits aus nichtmagnetischem Material besteht.

18. Vorrichtung nach einem der Ansprüche 13 bis 17, **dadurch gekennzeichnet, dass** die Stützmittel (120a) fest sind und dass der Rotor (131) auf den Stützmitteln mit einem dazwischen angeordneten Lager (11) montiert ist.

19. Vorrichtung nach einem der Ansprüche 13 bis 17, **dadurch gekennzeichnet, dass** die Stützmittel eine Verlängerung der Antriebswelle des Fahrzeugs bilden und zusammen mit dem Rotor verriegelt sind, um die Drehbewegung auf diesen zu übertragen.

## Revendications

1. Ensemble rotor composite conçu pour une utilisation dans un coupleur électromagnétique à frottement comprenant deux armatures concentriques l'une par rapport à l'autre et un seul électroaimant fixe à enroulement coaxial apte à être excité avec une excitation réduite pour rappeler uniquement l'armature la plus interne et avec une excitation complète pour rappeler les deux armatures, l'ensemble rotor composite comprenant :
un corps annulaire (131) en matériau ferromagnétique et convenant pour transporter un flux magnétique, le corps annulaire (131) comprenant :
une surface avant solidaire d'un manchon coaxial (131b), le manchon coaxial (131b) s'étendant vers un côté arrière (P) dans une direction longitudinale-axiale (X-X) et convenant pour se coupler avec un arbre de support (120a) ;
dans lequel un bord radialement externe du corps annulaire (131) s'étend axialement vers le côté arrière (P) ;
dans lequel un espace interne (135) est formé dans le corps annulaire (131) et s'étend de manière continue le long d'une circonférence du corps annulaire (131), le long d'un diamètre supérieur au diamètre du manchon coaxial (131b) et coaxial avec celui-ci ;
dans lequel un espace externe continu (636) est agencé le long d'une circonférence du corps annulaire (131), est concentrique avec ledit espace interne (135), et a un diamètre compris entre le diamètre externe de la surface avant et le diamètre dudit espace interne (135) ;
dans lequel un espace intermédiaire continu (637) est agencé le long d'une circonférence du corps annulaire (131), est concentrique avec ledit évidement interne (135), et a un diamètre compris entre le diamètre de l'espace externe (636) et le diamètre dudit espace interne (135) ;
**caractérisé en ce que** lesdits espaces interne, externe et intermédiaire (135, 636, 637) sont remplis d'un matériau soudé amagnétique solide et convenant pour interrompre la continuité d'un flux magnétique ;
dans lequel le corps annulaire (131) est formé de secteurs annulaires concentriques externe, intermédiaire et interne en matériau ferromagnétique, le secteur annulaire externe étant compris radialement entre le bord radialement externe du corps annulaire (131) et l'espace externe (636), le secteur annulaire interne étant compris radialement entre l'espace interne (135) et l'espace intermédiaire (637), et le secteur annulaire intermédiaire étant compris radialement entre l'espace intermédiaire (637) et l'espace externe (636) ;
dans lequel le corps annulaire (131) a soit :
une pluralité de trous radiaux (638), qui sont angulairement espacés les uns des autres, et qui reçoivent des broches s'étendant radialement (639) en matériau ferromagnétique et s'étendant radialement du secteur annulaire externe au secteur annulaire interne ; soit
une plaque annulaire ferromagnétique (739 ; 839) fixée à une surface arrière du corps annulaire (131) et s'étendant radialement entre le bord radialement externe du corps annulaire (131) et le secteur annulaire interne ;
les broches (639) ou la plaque (739 ; 839) permettant le passage radial d'un flux magnétique entre le secteur annulaire externe et le secteur annulaire interne du corps annulaire (131).

2. Rotor selon la revendication 1, **caractérisé en ce que** les trous radiaux (638) s'étendent à l'intérieur du corps annulaire (131) du rotor depuis le bord radialement externe jusqu'au secteur annulaire interne.

3. Rotor selon la revendication 1, **caractérisé en ce que** ladite plaque annulaire ferromagnétique (839) est appliquée sur la surface arrière du corps annulaire (131), via des moyens de fixation tels que des vis (839a), et s'étend radialement entre une surface radialement interne (131c) du bord externe axialement étendu du corps annulaire et le secteur annulaire interne.

4. Rotor selon la revendication 1, **caractérisé en ce que** ladite plaque annulaire (739) s'étend radialement entre une surface radialement interne (131c) du bord radialement externe axialement étendu du corps annulaire et le secteur annulaire interne et est pourvue d'un bord (739a) s'étendant dans la direction axiale et agencé en contact avec une surface radialement interne (131c) du bord externe axialement étendu.

5. Rotor selon la revendication 4, **caractérisé en ce que** ladite plaque annulaire (739) est attachée au corps annulaire (131) au moyen d'un soudage (740).

6. Rotor selon la revendication 4, **caractérisé en ce que** ladite plaque annulaire (739) est attachée au corps annulaire (131) au moyen d'un collage.

7. Ensemble rotor selon l'une quelconque des revendications précédentes, dans lequel le matériau soudé amagnétique solide dans les espaces (135, 636, 637) a une épaisseur telle qu'il laisse un vide dans la direction axiale au niveau d'une face avant du corps annulaire (131).

8. Ensemble rotor selon l'une quelconque des revendications précédentes, **caractérisé en ce que** le corps annulaire (131) est en acier magnétique trempé.

9. Rotor selon l'une quelconque des revendications 1 à 8, **caractérisé en ce qu'**une surface radialement externe (131a) du bord radialement externe étendu axialement est formée comme moyen pour prendre un mouvement de rotation.

10. Coupleur électromagnétique à frottement (200) comprenant un électroaimant fixe (210) à enroulement coaxial (220), un ensemble rotor qui loge l'électroaimant (210), et deux armatures (33, 34) concentriques l'une par rapport à l'autre, **caractérisé en ce que** ledit ensemble rotor est un ensemble rotor selon l'une quelconque des revendications précédentes.

11. Coupleur électromagnétique à frottement selon la revendication 10, **caractérisé en ce que** lesdites armatures (33, 34) ont des diamètres différents.

12. Coupleur à frottement selon la revendication 10 ou 11, **caractérisé en ce que** l'électroaimant (232) comprend deux enroulements (232a, 232b) indépendants et concentriques.

13. Dispositif de transmission de mouvement à un ventilateur (1) pour refroidir un liquide de refroidissement dans un véhicule automobile, le dispositif comprenant :
un moyen de support (120a) pour supporter le ventilateur (1) au moyen d'un organe de cloche de ralenti (1a) ; et
un coupleur électromagnétique (200) tel que défini dans l'une quelconque des revendications 10 à 12 ;
dans lequel une première armature (33) du coupleur électromagnétique (200) est reliée à l'organe de cloche de ralenti (1a) au moyen d'un second coupleur à courants de Foucault (300), dans lequel une seconde armature (34) du coupleur électromagnétique (200) est directement reliée à l'organe de cloche (1a), et dans lequel le second coupleur à courants de Foucault (300) est agencé entre l'ensemble rotor (131) et l'organe de cloche (1a), un électroaimant fixe (232) étant inséré dans l'ensemble rotor (131).

14. Dispositif selon la revendication 13, **caractérisé en ce que** l'électroaimant (232) est monté sur la bague d'un palier (11) au moyen d'une bride de support (12), ledit palier (11) étant agencé entre l'arbre tournant et la bride de support (12) joint à la base (10) d'un moteur du véhicule automobile.

15. Dispositif selon la revendication 13 ou 14, **caractérisé en ce que** ledit second coupleur à courants de Foucault comprend une première partie (310) jointe conjointement avec une bride (40) reliée à la première armature et une seconde partie (320) jointe conjointement avec l'organe de cloche (1a) du ventilateur (1).

16. Dispositif selon la revendication 15, **caractérisé en ce que** ladite première partie (310) du coupleur comprend une bague (313) en matériau magnétique destinée à contenir des aimants permanents (214).

17. Dispositif selon la revendication 15 ou 16, **caractérisé en ce que** ladite seconde partie (220) du coupleur comprend une bague (321) en matériau conducteur et jointe conjointement avec l'organe de cloche (1a) qui est à son tour en matériau amagnétique.

18. Dispositif selon l'une quelconque des revendications 13 à 17, **caractérisé en ce que** lesdits moyens de support (120a) sont fixes et **en ce que** le rotor (131) est monté sur lesdits moyens de support avec un palier (11) agencé entre les deux.

19. Dispositif selon l'une quelconque des revendications 13 à 17, **caractérisé en ce que** lesdits moyens de support forment une extension de l'arbre d'entraînement du véhicule et sont verrouillés conjointement avec le rotor pour lui transmettre le mouvement de rotation.
